# EUROPÄISCHE PATENTANMELDUNG

(11) **EP 4 095 051 A1**
(43) Veröffentlichungstag der Anmeldung: **30.11.2022**
(21) Anmeldenummer: 22173020.3
(22) Anmeldetag: 12.05.2022
(51) Int. Cl.: B65B 69/00, B65B 55/02, B25J 21/00, B25J 21/02, B65G 69/18, B65B 1/28, B65G 65/23

(54) **VERFAHREN UND VORRICHTUNG ZUM KONTAMINATIONSGESCHÜTZTEN ENTLEEREN EINES BEHÄLTNISSES**

(30) Priorität: 27.05.2021 CH 6032021
(71) Anmelder: Rubitec AG, 4431 Bennwil (CH)
(72) Erfinder: RUBITSCHUNG, Christoph, 4432 Lampenberg (CH)
(74) Vertreter: Troesch Scheidegger Werner AG

(57) **Zusammenfassung**

Verfahren zum kontaminationsgeschützten Entleeren eines Inhalts aus einem ersten formstabilen Behältnis, wobei das Verfahren die Schritte umfasst:
a) Bereitstellen 11 des ersten Behältnisses enthaltend den Inhalt, wobei das erste Behältnis eine Entleerungsöffnung aufweist und wobei der Inhalt dicht eingeschlossen ist;
b) Bereitstellen 12 einer Umfüllvorrichtung mit einer Eingangsöffnung, wobei ein schlauchförmiger Endlos-Liner auf einer Aussenseite der Umfüllvorrichtung und die Eingangsöffnung umgebend, dichtend und abziehbar gelagert ist, wobei ein Ende des schlauchförmigen Endlos-Liners dicht verschlossen ist, wobei zumindest ein elastischer Dichtring auf einer Innenseite der Umfüllvorrichtung gelagert ist;
c) Einführen 13 des ersten Behältnisses in die Eingangsöffnung der Umfüllvorrichtung, wobei die Entleerungsöffnung in Richtung des Innern der Umfüllvorrichtung weist;
e) Umspannen 15 der Wandung des ersten Behältnisses und des Endlos-Liners mit dem elastischen Dichtring entlang einer Umfangslinie des ersten Behältnisses; und
f) Endlos-Liner auf der Innenseite der Umfüllvorrichtung öffnen 16 und Inhalt entleeren.

Weiter ist die Erfindung auf eine Vorrichtung zur Durchführung des Verfahrens gerichtet.

## Beschreibung

Die vorliegende Erfindung betrifft ein Verfahren zum kontaminationsgeschützten Entleeren, respektive Umfüllen, eines Behältnisses und eine Vorrichtung zur Durchführung des Verfahrens.

Kontaminationsgeschützt bedeutet in diesem Zusammenhang, dass die zu entleerenden, respektive umzufüllenden Inhaltsstoffe nicht in die Umgebung entweichen. Zusätzlich kann erforderlich sein, dass beim Umfüllvorgang keine Stoffe aus der Umgebung mit den Inhaltsstoffen vermischt werden. Derartige Anforderungen an den Umgang mit Inhaltsstoffen werden beispielsweise bei der Handhabung von pharmazeutischen Komponenten gestellt. Im Stand der Technik sind Verfahren bekannt, welche als Hilfsmaterial Endlosschlauchfolien, sogenannte Endlos-Liner, verwenden.

Die Aufgabe der vorliegenden Erfindung bestand darin, ein Verfahren bereitzustellen, bei dem Inhaltsstoffe kontaminationsgeschützt aus einem Behältnis entleert, respektive umgefüllt, werden können.

Diese Aufgabe wird auf überraschend einfache Art durch das Verfahren nach Anspruch 1 gelöst.

Es handelt sich dabei um ein Verfahren zum kontaminationsarmen, insbesondere kontaminationsgeschützten, Entleeren eines Inhalts aus einem ersten formstabilen Behältnis. Das Verfahren umfasst die Schritte:
a) Bereitstellen des ersten Behältnisses enthaltend den Inhalt, wobei das erste Behältnis eine Entleerungsöffnung aufweist und wobei der Inhalt dicht eingeschlossen ist;
b) Bereitstellen einer Umfüllvorrichtung mit einer Eingangsöffnung, wobei ein schlauchförmiger Endlos-Liner auf einer Aussenseite der Umfüllvorrichtung und die Eingangsöffnung umgebend, dichtend und abziehbar gelagert ist, wobei ein Ende des schlauchförmigen Endlos-Liners dicht verschlossen ist, wobei zumindest ein elastischer Dichtring auf einer Innenseite der Umfüllvorrichtung gelagert ist;
c) Einführen des ersten Behältnisses in die Eingangsöffnung der Umfüllvorrichtung, wobei die Entleerungsöffnung in Richtung des Innern der Umfüllvorrichtung weist;
e) Umspannen der Wandung des ersten Behältnisses und des Endlos-Liners mit dem elastischen Dichtring entlang einer Umfangslinie des ersten Behältnisses; und
f) Öffnen des Endlos-Liners auf der Innenseite der Umfüllvorrichtung und Entleeren des Inhalts.

Der Schritt des Öffnens kann beispielsweise im Abnehmen eines Deckels und/oder im Öffnen eine Innenbeutels bestehen. Entleeren des Inhalts kann ein Teil eines Umfüllvorgangs sein.

Für den Fachmann überraschend ist der Ansatz, elastische Dichtungsringe im kontaminierten Innenbereich der Vorrichtung zu lagern. Der Ablauf des Verfahrens führt auf einfache Weise dazu, dass die elastischen Dichtungsringe auf der Innenseite des Endlos-Liners bleiben und kontaminationsgeschützt zusammen mit dem entleerten ersten Behältnis entsorgt werden können.

Das erste Behältnis kann beispielsweise ein Fass oder eine Dose sein. Es kann beispielsweise kreiszylindrische Form haben mit einer formstabilen Wandung in Form eines Zylindermantels und eines Bodens, wobei an einer dem Boden gegenüberliegenden Seite die Entnahmeöffnung liegt. Die Entnahmeöffnung kann beispielsweise zum Transport mit einem Deckel verschlossen sein, welcher im Rahmen eines der folgenden Schritte aber entfernt wird. Ein Entfernen eines solchen Deckels ist bereits im Schritt a) möglich, sofern der Inhalt zusätzlich in einem dicht verschlossenen Sack ist. Das erste Behältnis kann beispielsweise eine um die Wandung umlaufende Nut aufweisen, um einen stabilen Sitz des elastischen Dichtrings in dieser Nut zu ermöglichen und eine erste Dichtstelle zu generieren.

Der schlauchförmige Endlosliner kann beispielsweise an seinem zweiten Ende auf einem Rohr abgedichtet gelagert sein, wobei der freie Querschnitt dieses Rohres die Entnahmeöffnung bildet.

Der mindestens eine elastische Dichtring kann aus einem elastischen Material bestehen, wie z.B. Gummi. Der mindestens eine elastische Dichtring kann die Form eines O-Rings haben. Es kann ein Vorrat an mehreren elastischen Dichtringen auf einer Innenseite der Umfüllvorrichtung gelagert sein. Der elastische Dichtring ist so dimensioniert, dass er auf eine Umfangslänge gedehnt werden kann, welche der Umfangslinie des ersten Behältnisses entspricht, welche durch den Dichtring im Schritt e) umspannt werden soll. Der Dichtring hat im entspannten Zustand eine Umfangslänge, welche kürzer ist, als die Länge der genannten Umfangslinie.

Die Umfüllvorrichtung kann eine Manipulationseinrichtung zur Durchführung von Manipulationen im Innern der Umfüllvorrichtung aufweisen. Eine solche Manipulationsvorrichtung kann beispielsweise durch ein Roboterarm verwirklicht sein. Die Manipulationsvorrichtung kann eine mehrteilige Vorrichtung sein, wobei durch die verschiedenen Teile Funktionen wie Schneiden, Abrollen eines O-Rings aus einem O-Ring Depot, etc. je durch einen anderen Teil der Vorrichtung durchgeführt werden. Die Manipulationsvorrichtung kann beispielsweise ein oder mehrere Handschuh/e sein, welcher dichtend mit einer Wandung der Umfüllvorrichtung verbunden ist und ein Eingreifen mit einer Hand oder beiden Händen eines Operators ermöglicht. Weitere Manipulationsvorrichtungen können auf einer Aussenseite, d.h. auf der nichtkontaminierten Seite der Vorrichtung vorhanden sein, beispielsweise um Krimp-Vorgänge durchzuführen.

Die Eingangsöffnung der Umfüllvorrichtung, kann von einer Blähdichtung umrandet sein. Mit der Blähdichtung kann eine zusätzliche Abdichtung und damit eine weiter erhöhte Sicherheit gegen Kontamination erreicht werden. Die Blähdichtung kann beispielsweise in einem Eingangsrohr aufgenommen sein. Der schlauchförmige Endlos-Liner kann auf einer Aussenseite der Umfüllvorrichtung und radial aussen auf dem Eingangsrohr dichtend und abziehbar gelagert sein. Elastische Dichtringe können radial aussen auf dem Eingangsrohr gelagert sein, allerdings auf der Innenseite der Umfüllvorrichtung.

Das Einführen des ersten Behältnisses im Schritt c) kann beispielsweise mit der Entleerungsöffnung voran in die Eingangsöffnung der Umfüllvorrichtung erfolgen.

Im Fall, dass eine Blähdichtung vorhanden ist, kann Schritt c) so erfolgen, dass ein ringförmiger Abschnitt des EndlosLiners zwischen die Blähdichtung und die formstabile Wandung des ersten Behälters zu liegen kommt. Danach folgt optional Schritt d) Aufblasen der Blähdichtung bis zum Erreichen eines ersten dichten Abschlusses zwischen Blähdichtung, ringförmigem Abschnitt des Endlos-Liners und Wandung des ersten Behältnisses.

Schritt e) kann beispielsweise durch Entnehmen eines O-Rings aus einem Vorrat an O-Ringen durchgeführt werden. Der Effekt des Schrittes e) liegt im Erstellen eines dichten Abschlusses zwischen dem Endlos-Liner und der Wandung des ersten Behältnisses durch Umspannen der Wandung mit dem elastischen Dichtring. Falls vorher der optionale Schritt des Aufblasens einer Blähdichtung erfolgt ist, wird durch Schritt e) der zweite dichte Abschluss zwischen dem EndlosLiner und der Wandung des ersten Behältnisses erstellt.

Das Öffnen im Schritt f) kann beispielsweise durch Zerschneiden des Endlos-Liner-Teiles innerhalb der Umfüllvorrichtung erfolgen. Im Schritt f) können gegebenenfalls weitere Verschlusselemente geöffnet werden, beispielsweise ein Deckel von einem Fass abgenommen oder ein Innenbeutel in einem Behältnis geöffnet werden, sodass schliesslich der Inhalt entnommen werden kann.

Varianten des Verfahrens ergeben sich aus den Merkmalen der abhängigen Ansprüche 2 bis 6.

In einer Variante umfasst das Verfahren weiter den Schritt d) Aufblasen einer Blähdichtung bis zum Erreichen eines dichten Abschlusses zwischen der Blähdichtung, einem ringförmigen Abschnitt des Endlos-Liners und der Wandung des ersten Behältnisses. Der Schritt d) wird zwischen Schritt c) und Schritt e) durchgeführt. Das Aufblasen der Blähdichtung kann beispielsweise automatisch erfolgen. Mit dem zusätzlichen Schritt d) wird eine noch höhere Sicherheit in Bezug auf Kontamination erreicht. Beispielsweise ein versehentliches Abrutschen eines Dichtringes während einem Entleerungsvorgang führt dank dem weiteren dichten Abschluss durch die Blähdichtung nicht zu einem Entweichen des Inhalts aus der Umfüllvorrichtung hinaus.

In einer Variante umfasst das Verfahren weiter die Schritte:
h) Herausführen des ersten Behältnisses aus der Eingangsöffnung;
i) dichtes Verschliessen des Endlos-Liners an zwei beabstandeten Stellen und
j) Zerschneiden des Endlos-Liners zwischen den beiden dicht verschlossen Stellen.

In dieser Variante wird der Behälter nicht nur entleert, sondern es werden die notwendigen Schritte durchgeführt, welche ein nachfolgendes Entleeren eines weiteren gleichartigen Behältnisses gemäss dem Erfindungsgemässen Verfahren unter denselben kontaminationsgeschützten Bedingungen ermöglicht. Das erste Behältnis, der Dichtungsring und ein kontaminierter Liner-Rest sind nach dem Schritt j) mit dem Endlos-Liner von der Umgebung separiert. Das erste Behältnis kann entsorgt werden.

Falls diese Variante mit einer Blähdichtung ausgeführt wird, erfolgt vor Schritt h) ein Schritt g) Blähdichtung entlasten.

Das Verschliessen in Schritt i) kann z.B. direkt vor der Entleerungsöffnung des ersten Behältnisses vorgenommen werden. Auf diese Weise wird der Verbrauch an Endlos-Liner niedrig gehalten.

In einer Variante des Verfahrens wird vor dem Schritt h) der Schritt
g) Entlasten der Blähdichtung
durchgeführt. Diese Variante ist für den Fall anwendbar, dass im optionalen Schritt d) eine Blähdichtung aufgeblasen wurde. Ein Herausführen des Behältnisses aus der Eingangsöffnung wird dann nicht durch die Blähdichtung behindert.

In einer Variante des Verfahrens ist der Inhalt im Schritt a) durch einen Verschluss über der Entleerungsöffnung dicht eingeschlossen und wird im Schritt f) der Verschluss von der Entleerungsöffnung entfernt, um das erste Behältnis zu öffnen.

Ein solcher Verschluss kann beispielsweise ein Deckel auf einem Fass sein.

In einer weiteren Variante des Verfahrens ist im Schritt a) ein zweites, flexibles Behältnis im ersten Behältnis gehalten. Das zweite Behältnis schliesst den Inhalt dicht ein. Das zweite Behältnis ist durch die Entleerungsöffnung im ersten Behältnis zugänglich. Im Schritt f) wird zusätzlich auch das zweite Behältnis auf der Innenseite der Umfüllvorrichtung geöffnet, beispielsweise durch Aufschneiden.

Das zweite flexible Behältnis kann z.B. die Form eines Sacks haben. Es kann beispielsweise aus einem Liner desselben Typs geformt sein, wie er im Verfahren als Endlos-Liner verwendet wird.

Im Fall, dass ein vorangegangener Befüllvorgang des zweiten, flexiblen Behältnisses sauber durchgeführt wurde und dass das erste Behältnis mit einem Verschluss verschlossen ist, kann der Verschluss bereits ausserhalb der Umfüllvorrichtung abgenommen werden, ohne dass die Gefahr einer Kontamination der Umgebung besteht. Das heisst beispielsweise im Fall von Fässern mit einem zusätzlichen Innensack als zweitem, flexiblem Behältnis, bei denen der Befüllvorgang sauber durchgeführt wurde und sowohl Sackaussenseite wie Fassinnenseite sauber sind, kann der Deckel bereits ausserhalb der Umfüllvorrichtung abgenommen werden. Wurde die Abfüllung unsauber durchgeführt, sodass Sackaussenseite und/oder Fassinnenseite kontaminiert sind, wird der Fassdeckel erst im Innern der Umfüllvorrichtung abgenommen.

Weiter ist die Erfindung auf eine Vorrichtung nach Anspruch 7 gerichtet.

Die erfindungsgemässe Vorrichtung ist eine Vorrichtung zum kontaminationsgeschützten Entleeren eines Behältnisses. Die Vorrichtung weist eine Eingangsöffnung auf. Die Vorrichtung ist derart ausgebildet, dass ein schlauchförmiger EndlosLiner auf einer Aussenseite der Umfüllvorrichtung die Eingangsöffnung umgebend dichtend und abziehbar gelagert sein kann. Weiter ist zumindest ein elastischer Dichtring auf einer Innenseite der Umfüllvorrichtung lagerbar. Die Vorrichtung ist derart ausgebildet ist, dass sie als Umfüllvorrichtung im erfindungsgemässen Verfahren verwendbar ist.

Ein grösserer Vorrat an elastischen Dichtringen kann vorgesehen sein.

Die Eingangsöffnung kann von einer Blähdichtung umrandet sein, sodass Varianten des Verfahrens, welche eine Blähdichtung benötigen, mit Hilfe der Vorrichtung ausführbar sind. Die Blähdichtung kann beispielsweise in einem Eingangsrohr aufgenommen sein. Ein schlauchförmiger Endlos-Liner kann auf einer Aussenseite der Vorrichtung und radial aussen auf dem Eingangsrohr dichtend und abziehbar gelagert sein. Die Vorrichtung kann eine Manipulationseinrichtung zur Durchführung von Manipulationen im Innern der Vorrichtung aufweisen.

Ausführungsformen der Vorrichtung ergeben sich aus den Merkmalen der Ansprüche 8 und 9, sowie aus weiteren im Folgenden besprochenen Merkmalen.

In einer Ausführungsform der Vorrichtung definiert ein Eingangsrohr die Eingangsöffnung. Das Eingangsrohr ist so ausgebildet, dass ein Vorrat an elastischen Dichtringen auf einer Innenseite der Umfüllvorrichtung radial aussen auf dem Eingangsrohr gelagert sein kann.

In dieser Ausführungsform ist der mindestens eine elastische Dichtring auf einen Durchmesser vorgespannt, welcher grösser ist, als der Durchmesser des ersten Behältnisses, welches durch das Eingangsrohr eingeführt wird. Im Schritt e) kann der Dichtring über ein Ende des Eingangsrohrs hinausgeschoben werden, wonach er sich auf die Umfangslinie des ersten Behältnisses zusammenzieht. Das Eingangsrohr kann beispielsweise an dem ins Innere der Vorrichtung weisenden Ende einen Flansch, also eine Verdickung am Aussendurchmesser, aufweisen, welcher ein versehentliches Abrutschen eines Dichtrings über das Ende hinaus verhindert.

In einer weiteren Ausführungsform, welche mit den bereits genannten Ausführungsformen kombiniert werden kann, ist die Eingangsöffnung von einer Blähdichtung umrandet. Mit dieser Ausführungsform der Vorrichtung können die oben besprochenen optionalen Verfahrensschritte d) und g) ausgeführt werden.

Ausführungsbeispiele der vorliegenden Erfindung werden nachstehend anhand von Figuren noch näher erläutert. Es zeigen
Fig. 1 ein Flussdiagramm mit den Schritten des erfindungsgemässen Verfahrens;
Fig. 2 ein Flussdiagramm einer Variante des Verfahrens;
Fig. 3 bis 8 eine schematische Seitenansicht von Behältnissen und Vorrichtung bei verschiedenen Schritten einer Variante Verfahrens;
Fig. 9.a) und 9.b) Details "F" und "G" aus Fig. 7 und Fig. 8, resp. Fig. 15 und Fig. 16;
Fig. 10 schematisch und im Querschnitt eine erfindungsgemässe Vorrichtung neben Alternativen von Behältnissen, die im Rahmen des Verfahrens zu entleeren sind;
Fig. 11 bis 16 eine schematische Seitenansicht von Behältnissen und einer Variante der Vorrichtung bei verschiedenen Schritten einer weiteren Variante Verfahrens.

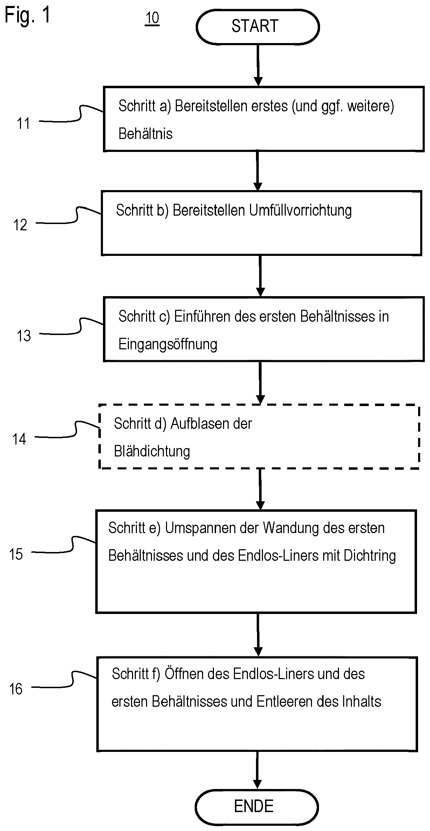

In Figur 1 ist der Ablauf der Schritte a) bis f) des Verfahrens 10 illustriert. Mit gestrichelt dargestelltem Rechteck ist der optionale Schritt d) dargestellt, welcher in denjenigen Varianten ausgeführt wird, in denen eine Blähdichtung verwendet wird.

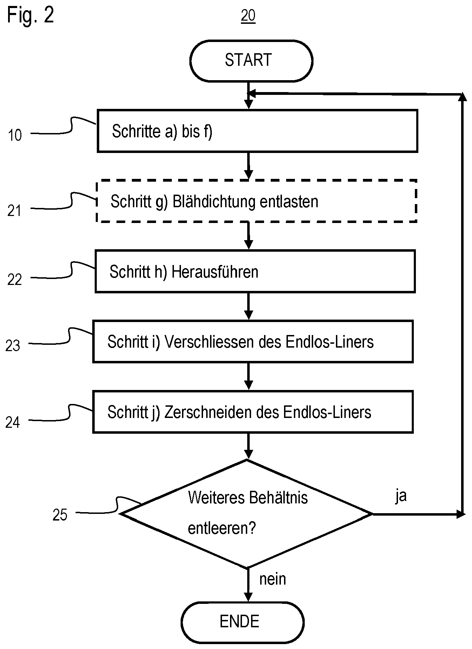

In Figur 2 ist die Variante 20 des Verfahrens dargestellt, welche zusätzlich zu den Schritten a) bis f) auch noch die Schritte h) bis j) umfasst. Nach dem Schritt j) kann bei Bedarf ein weiteres Behältnis entleert werden und das Verfahren kann mit einem neuen Behältnis bei Schritt a) fortgesetzt werden. Ist der optionale Schritt d) ausgeführt worden, so wird der ebenfalls gestrichelt dargestellt optionale Schritt g) "Blähdichtung entlasten" ebenfalls durchgeführt.

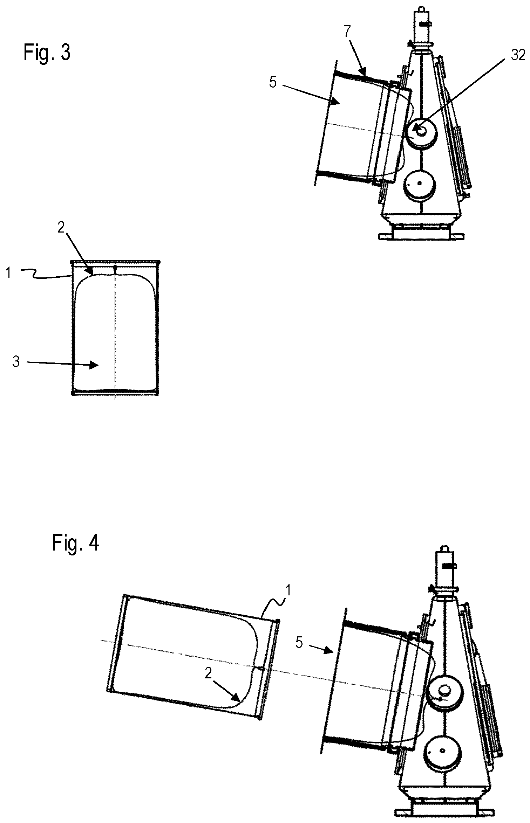

Die Zeichnungen Fig. 3 bis Fig. 8 zeigen den Ablauf für eine Variante des Verfahrens. Die Darstellung ist schematisch, teilweise in Seitenansicht, teilweise als Schnitt gezeigt.

Fig. 3 zeigt die Ausgangslage: Das erste Behältnis 1 ist in dieser Variante ein Fass. Das Fass mit dem zu entleerenden Inhaltsstoff steht neben der Umfüllvorrichtung bereit. Der Inhalt ist in dieser Darstellung nicht gezeigt, aber sein Ort durch den Pfeil 3 angedeutet. Der Inhalt, der beispielweise ein Feststoff in Form von schüttbarem Granulat, Pulver oder eine Flüssigkeit sein kann, ist ganz von einem Liner in Form eines Beutels umschlossen, welcher sich gänzlich innerhalb des Fasses befindet. Dieser Liner ist in der gezeigten Variante das zweite Behältnis 2, welches den Inhalt dicht einschliesst. Das erste Behältnis braucht in dieser Variante keinen Verschluss oder Deckel zu tragen, um den Inhalt kontaminationsfrei von der Umgebung fernzuhalten. Die Krimp- und Schnittstelle 32 des Endlosliners 7 ist verschlossen, sie kann beispielsweise bei der letzten Abdockung so vorbereitet worden sein.

Fig. 4 zeigt den Zustand, nachdem das Fass 1 angehoben und gekippt wurde. Die Achse des Fasses ist nun auf die Einführöffnung 5 der Umfüllvorrichtung ausgerichtet.

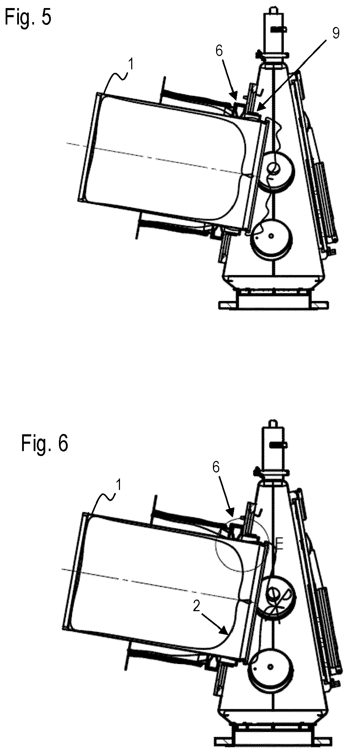

Fig. 5 zeigt den Zustand, nachdem das Fass parallel zu seiner Achse in die Einführöffnung eingefahren wurde. Eine Abdichtung zwischen einer Aussenseite des Fasses und der Umfüllvorrichtung wird in diesem Beispiel in zwei Teilschritten durchgeführt. Erstens wird eine Blähdichtung 6 aufgeblasen, welche den Endlosliner von aussen gegen die Wand des Fasses drückt. Dieses Andrücken erfolgt entlang einer ersten Umfangslinie des Fasses. Zweitens wird ein Dichtring 9, hier in Form eines O-Rings, ab einem O-Ring-Depot abgerollt, sodass der abgerollte O-Ring den Endlosliner an einer zweiten Umfangslinie des Fasses gegen das Fass drückt. Die zweite Umfangslinie liegt an derjenigen Aussenfläche des Fasses an, welche in Bezug auf die Blähdichtung der Umfüllvorrichtung zugewandt liegt.

Fig. 6 zeigt den Zustand mit zwei dichtenden Ringen, nämlich der aufgeblasenen Blähdichtung 6 und dem O-Ring 9, welcher den Liner ans Fass anpresst. In diesem Zustand wird nun der Endlosliner hinter der Krimp-Stelle durchgeschnitten, wie mit dem Scherensymbol illustriert. Dann wird der Liner 2, welcher den Inhaltsstoff umschliesst, von der Innenseite der Umfüllvorrichtung her aufgeschnitten.

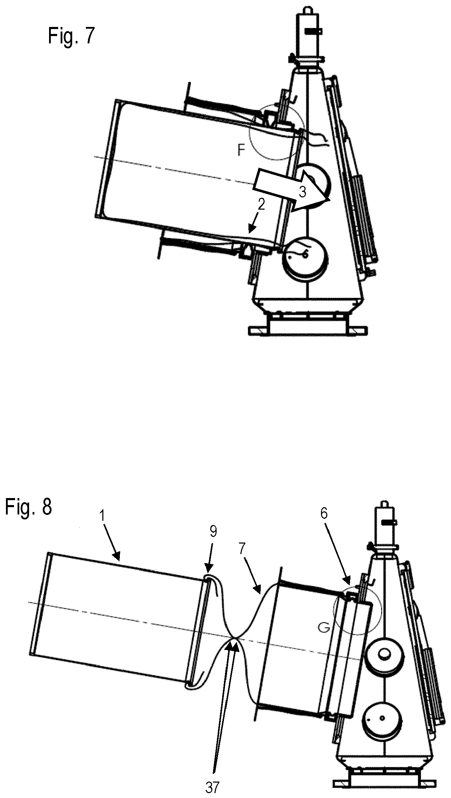

Fig. 7 zeigt den Zustand, in welchem der Inhalt 3 ausgetragen werden kann. Das Austragen erfolgt in das Innere der Umfülleinrichtung hinein. Inhaltsstoff kann nicht in die Umgebung entweichen und Stoffe aus der Umgebung gelangen nicht auf die Innenseite der Umfüllvorrichtung. Kontaminationsgeschütztes Austragen des Inhaltsstoffs ist in dieser Anordnung möglich.

Fig. 8 zeigt den weiteren Verlauf nach dem Entleeren. Das Fass 1 wurde bereits zurückgefahren. Ein kontaminierter Liner-Rest kommt zwischen O-Ring 9 und den Bereich vor der Öffnung des Fasses zu liegen. Ein Abstand zwischen Eingangsöffnung der Umfüllvorrichtung bleibt durch den Endlosliner 7 abgedichtet, wobei der kontaminierte Liner-Rest, resp. die kontaminierte Innenseite des Endlos-Liners von der Umgebung getrennt bleiben. Der Endlosliner wird an zwei Stellen zwischen Fass und Eingangsöffnung gekrimpt. Der Endlosliner wird zwischen den beiden gekrimpten Stellen 37 durchgeschnitten. Die Öffnung des Fasses bleibt durch ein Stück des Endlosliners, den O-Ring und eine KrimpStelle verschlossen. Das Fass kann nun kontaminationsfrei entsorgt werden. Auf Seite der Umfüllvorrichtung ist die Eingangsöffnung durch den Endlosliner und die neu erstellte Krimp-Stelle verschlossen und bereit für einen weiteren Umfüllvorgang. Ein weiterer Vorgang gemäss Fig. 3 kann nun stattfinden.

Der Liner, der ursprünglich im Fass war, kann in diesem Endzustand des Verfahrens alternativ in der Umfüllvorrichtung oder im Fass liegen. In beiden Fällen ist eine Kontamination der Umgebung mit am Liner anhaftendem Inhaltsstoff ausgeschlossen.

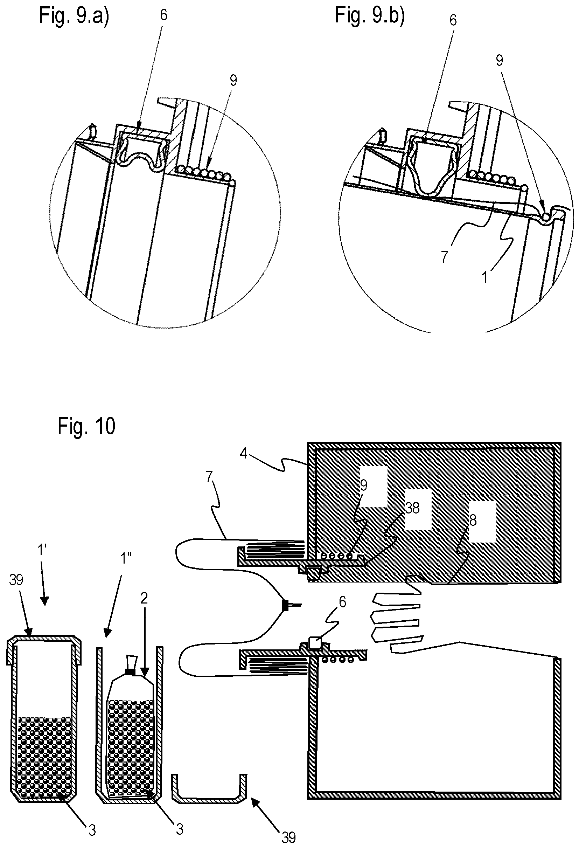

Fig. 9.a) zeigt das mit "G" bezeichnete Detail aus Fig. 8 als Querschnittszeichnung. Die Blähdichtung 6 ist im entlasteten Zustand. Ein Vorrat an O-Ringen 9 liegt auf einer Aussenfläche eines Eingangsrohrs, welches nach rechts hin mit einer Verdickung versehen ist, welche ein versehentliches Abrutschen der vorgespannten O-Ringe über das Ende des Eingangsrohrs verhindert.

Fig. 9.b) zeigt das mit "F" bezeichnete Detail aus Fig. 7 als Querschnittszeichnung. Die Blähdichtung 6 ist im aufgeblasenen Zustand und presst den Endlosliner 7 gegen die Wandung des ersten Behältnisses 1. Ein O-Ring 9 aus dem O-Ring Vorrat wurde über den Flansch hinweg abgerollt und presst den Endlos-Liner in einer um das Behältnis 1 umlaufenden Nut gegen die Wandung des Behältnisses.

Fig. 10 zeigt in einer schematischen Querschnittszeichnung Elemente einer Ausführungsform der Vorrichtung, welche als Umfüllvorrichtung im erfindungsgemässen Verfahren verwendet werden kann. Zwei Alternativen von Behältnissen 1', 1'' stehen neben der Vorrichtung 4 bereit. Auf einer Aussenseite der Vorrichtung ist ein schlauchförmiger Endlos-Liner 7 angebracht, welcher an einer Krimp-Stelle verschlossen ist. Der Endlos-Liner ist um den Rand einer Eingangsöffnung der Vorrichtung herum dichtend angebracht. Das Verschlossene Ende des Endlos-Liners ist bereits so umgestülpt, dass eines der Behältnisse 1' oder 1'' in diese Umstülpung eingeführt werden kann und die Umstülpung beim Einführen in die Eingangsöffnung der Vorrichtung mitnehmen können. Der Endlosliner kann beispielsweise vorher manuell nach aussen nachgezogen werden und eine genügende Länge ins Innere des Rohres umgestülpt werden. Das Umstülpen geschieht beispielsweise selbsttätig, wenn ein Unterdruck in der Box vorhanden ist. Diese Art des Umstülpens hat den Vorteil, dass der Liner nur sehr wenig mechanisch belastet wird. Müsste beispielsweise stattdessen das Fass den umgestülpten Liner nachziehen, so könnte dieser leicht reissen. Die gezeigte Ausführungsform der Vorrichtung weist eine Blähdichtung 6 auf, welche die Eingangsöffnung umrandet. Auf einem Träger 38 für einen O-Ring Vorrat sind O-Ringe 9 vorgespannt gelagert. Eine Manipulationseinrichtung 8, hier in Form eines abgedichteten Handschuhs, welcher ins Innere der Vorrichtung ragt, ermöglicht es, O-Ringe über das Ende des Trägers 38 abzurollen, Behältnisse auf der Innenseite der Vorrichtung zu öffnen und Inhalt zu entleeren.

Eine erste Alternative des ersten Behältnisses 1' ist durch einen Deckel 39 verschlossen, sodass der Inhalt 3 gegen die Umgebung abgedichtet gelagert ist. Der Deckel 39 wird erst im Schritt f) von der Entleerungsöffnung des Behältnisses 1' entfernt. Bei einer zweiten Alternative des ersten Behältnisses 1' ist ein zweites flexibles Behältnis im ersten Behältnis aufgenommen. Das zweite Behältnis schliesst hier den Inhalt 3 dicht ein. Ein Deckel 39 des ersten Behältnisses kann bereits in diesem Zustand abgenommen werden, ohne dass eine Kontamination zu befürchten ist. Das erste Behältnis ist in beiden Alternativen formstabil.

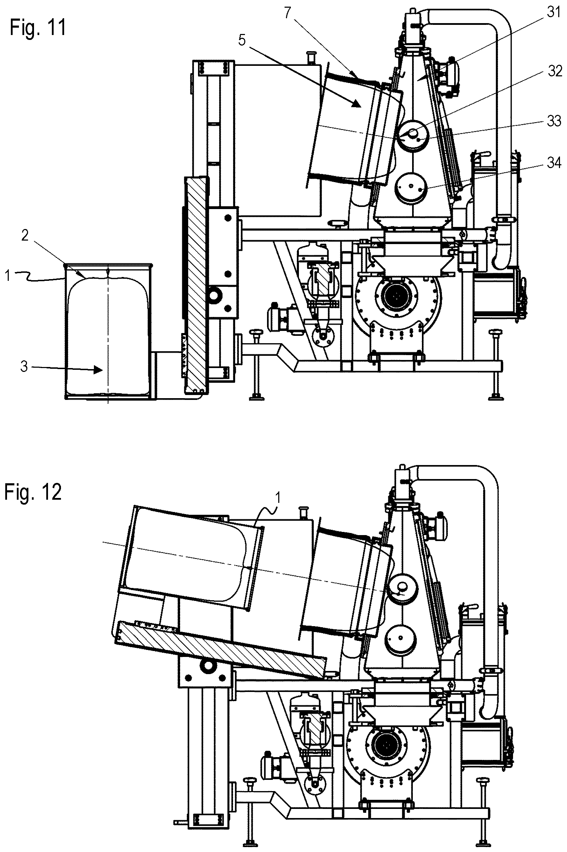

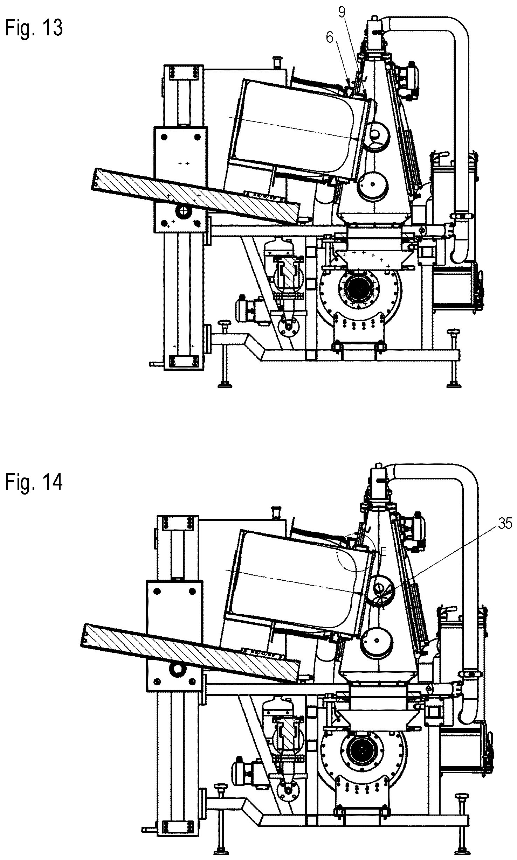

Die Zeichnungen Fig. 11 bis Fig. 16 zeigen den Ablauf für eine Variante des Verfahrens mit einer Vorrichtung, welche zusätzliche Merkmale aufweist. Die Darstellung ist schematisch, teilweise in Seitenansicht, teilweise als Schnitt gezeigt. Die Fig. 11 bis Fig. 16 korrespondieren mit den sechs Zuständen, welche oben in Fig. 3 bis Fig. 8 an einem einfacheren Beispiel bereits erläutert wurden. Die in Fig. 9.a) und 9.b) gezeigten Details entsprechen auch hier den als "E", "F" und "G" beschrifteten Details in Fig. 14, 15 und 16.

Fig. 11 zeigt die Ausgangslage: Das erste Behältnis 1 ist in dieser Variante ein Fass. Das Fass mit dem zu entleerenden Inhaltsstoff steht neben der Umfüllvorrichtung bereit. Der Inhalt ist in dieser Darstellung nicht gezeigt, aber sein Ort durch den Pfeil 3 angedeutet. Der Inhalt, der beispielweise ein Feststoff in Form von schüttbarem Granulat, Pulver oder eine Flüssigkeit sein kann, ist ganz von einem Liner in Form eines Beutels umschlossen, welcher sich gänzlich innerhalb des Fasses befindet. Dieser Liner ist in der gezeigten Variante das zweite Behältnis 2, welches den Inhalt dicht einschliesst. Das erste Behältnis braucht in dieser Variante keinen Verschluss oder Deckel zu tragen, um den Inhalt kontaminationsfrei von der Umgebung fernzuhalten. Ein Unterdruck in der Innenseite 31 Umfüllvorrichtung, welche im hier gezeigten Fall als Glove-Box ausgebildet ist, wird geregelt, z.B. auf -100 Pa gegenüber dem Aussendruck; Die Krimp- und Schnittstelle 32 des Endlosliners 7 ist verschlossen, sie kann beispielsweise bei der letzten Abdockung so vorbereitet worden sein; die Umfüllvorrichtung weist einen Abluftfilter 33 auf; die Umfüllvorrichtung hat einen "Bag out port" 34 zum Herausnehmen von im Innern der Umfüllvorrichtung abgeschnittenen Liner-Enden. Eine Schleuse zum Einschleusen beispielsweise von Dichtringen (z.B. O-Ringen) kann ebenfalls vorhanden sein.

Fig. 12 zeigt den Zustand, nachdem das Fass 1 angehoben und gekippt wurde. Die Achse des Fasses ist nun auf die Einführöffnung 5 der Umfüllvorrichtung ausgerichtet.

Fig. 13 zeigt den Zustand, nachdem das Fass parallel zu seiner Achse in die Einführöffnung eingefahren wurde. Eine Abdichtung zwischen einer Aussenseite des Fasses und der Umfüllvorrichtung wird in diesem Beispiel in zwei Teilschritten durchgeführt. Erstens wird eine Blähdichtung 6 aufgeblasen, welche den Endlosliner von aussen gegen die Wand des Fasses drückt. Dieses Andrücken erfolgt entlang einer ersten Umfangslinie des Fasses. Zweitens wird ein Dichtring 9, hier in Form eines O-Rings, ab einem O-Ring-Depot abgerollt, sodass der abgerollte O-Ring den Endlosliner an einer zweiten Umfangslinie des Fasses gegen das Fass drückt. Die zweite Umfangslinie liegt an derjenigen Aussenfläche des Fasses an, welche in Bezug auf die Blähdichtung der Umfüllvorrichtung zugewandt liegt.

Fig. 14 zeigt den Zustand mit zwei dichtenden Ringen, nämlich der aufgeblasenen Blähdichtung 6 und dem O-Ring 9, welcher den Liner ans Fass anpresst. In diesem Zustand wird nun der Endlosliner hinter der Krimp-Stelle durchgeschnitten 35. Dann wird der Liner, welcher den Inhaltsstoff umschliesst, von der Innenseite der Umfüllvorrichtung her aufgeschnitten.

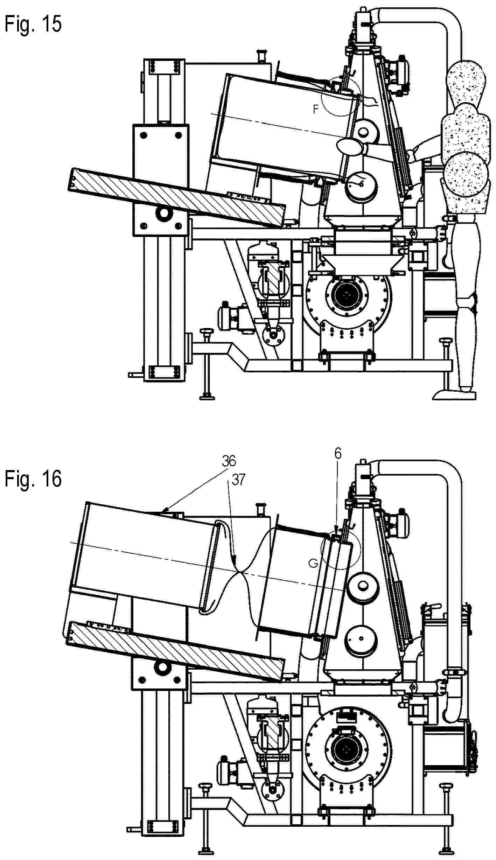

Fig. 15 zeigt den Zustand, in welchem der Inhalt 3 ausgetragen werden kann. Das Austragen erfolgt in das Innere der Umfülleinrichtung hinein. In der gezeigten Variante des Verfahrens erfolgt dieser Vorgang manuell.

Eine Person greift von aussen in den abgedichteten Handschuh der Glove-Box und nimmt die nötigen Handgriffe zur Entnahme der Inhaltsstoffe vor. Inhaltsstoff kann nicht in die Umgebung entweichen und Stoffe aus der Umgebung gelangen nicht auf die Innenseite der Umfüllvorrichtung. Kontaminationsgeschütztes Austragen des Inhaltsstoffs ist in dieser Anordnung möglich.

Fig. 16 zeigt den weiteren Verlauf nach dem Entleeren. Das Fass wurde bereits zurückgefahren 36. Ein kontaminierter Liner-Rest kommt zwischen O-Ring und den Bereich vor der Öffnung des Fasses zu liegen. Ein Abstand zwischen Eingangsöffnung der Umfüllvorrichtung bleibt durch den Endlosliner abgedichtet, wobei der kontaminierte Liner-Rest, resp. die kontaminierte Innenseite des Endlos-Liners von der Umgebung getrennt bleiben. Der Endlosliner wird an zwei Stellen zwischen Fass und Eingangsöffnung gekrimpt.

Der Endlosliner wird zwischen den beiden gekrimpten Stellen 37 durchgeschnitten. Die Öffnung des Fasses bleibt durch ein Stück des Endlosliners, den O-Ring und eine KrimpStelle verschlossen. Das Fass kann nun kontaminationsfrei entsorgt werden. Auf Seite der Umfüllvorrichtung ist die Eingangsöffnung durch den Endlosliner und die neu erstellte Krimp-Stelle verschlossen und bereit für einen weiteren Umfüllvorgang. Ein weiterer Vorgang gemäss Fig. 11 kann nun stattfinden.

Der Liner, der ursprünglich im Fass war, kann in diesem Endzustand des Verfahrens alternativ in der Umfüllvorrichtung oder im Fass liegen. In beiden Fällen ist eine Kontamination der Umgebung mit am Liner anhaftendem Inhaltsstoff ausgeschlossen.

Es gibt auch die Situation, wo trotz eines Liners resp. Sackes im Fass der Deckel erst in der Box abgenommen werden darf, wenn zu erwarten ist, dass die Abfüllung unsauber durchgeführt wurde und der Liner im Fass aussen kontaminiert ist.

Im Falle eines Fasses ohne Liner resp. ohne Sack, wo also der Fassdeckel erst in der Box abgenommen wird, muss dessen Aussenseite gegebenenfalls vorher gereinigt werden.

### Bezugszeichenliste

- 1, 1', 1'': erstes Behältnis (mit formstabiler Wandung)
- 2: zweites Behältnis (flexibel), z.B. Liner, Sack
- 3: Inhalt
- 4: Umfüllvorrichtung
- 5: Eingangsöffnung
- 6: Blähdichtung
- 7: Endlos-Liner
- 8: Manipulationseinrichtung
- 9: Dichtring
- 10: Verfahren
- 11: Schritt a) Bereitstellen erstes und zweites Behältnis
- 12: Schritt b) Bereitstellen Umfüllvorrichtung
- 13: Schritt c) Einführen des zweiten Behältnisses in die Eingangsöffnung
- 14: Schritt d) Aufblasen der Blähdichtung
- 15: Schritt e) Umspannen der Wandung des zweiten Behältnisses und des Endlos-Liners mit einem Dichtring
- 16: Schritt f) Öffnen des Endlos-Liners und des ersten Behältnisses und Entleeren des Inhalts
- 20: Variante des Verfahrens
- 21: Schritt g) Blähdichtung entlasten
- 22: Schritt h) Herausführen des zweiten Behältnisses aus der Eingangsöffnung
- 23: Schritt i) Verschliessen des Endlos-Liners
- 24: Schritt j) Zerschneiden des Endlos-Liners
- 25: Entscheidung: Weiteres Behältnis entleeren, ja/nein?
- 31: Innenseite, z.B. mit geregeltem Unterdruck -100 Pa
- 32: Krimp- und Schnittstelle nach letzter Abdockung
- 33: Abluftfilter
- 34: "Bag out port" für abgeschnittene Linerenden
- 35: Folie hinter Krimpstelle durchschneiden
- 36: erstes Behältnis (z.B. Fass) zurückfahren
- 37: Liner krimpen, schneiden
- 38: Träger für O-Ring Vorrat
- 39: Verschluss / Deckel für Eingangsöffnung

## Patentansprüche

1. Verfahren (10, 20) zum kontaminationsarmen Entleeren eines Inhalts aus einem ersten formstabilen Behältnis (1, 1', 1''), wobei das Verfahren die Schritte umfasst:
a) Bereitstellen (11) des ersten Behältnisses enthaltend den Inhalt (3), wobei das erste Behältnis eine Entleerungsöffnung aufweist und wobei der Inhalt dicht eingeschlossen ist;
b) Bereitstellen (12) einer Umfüllvorrichtung (4) mit einer Eingangsöffnung (5), wobei ein schlauchförmiger EndlosLiner (7) auf einer Aussenseite der Umfüllvorrichtung und die Eingangsöffnung umgebend, dichtend und abziehbar gelagert ist, wobei ein Ende des schlauchförmigen EndlosLiners dicht verschlossen ist, wobei zumindest ein elastischer Dichtring auf einer Innenseite der Umfüllvorrichtung gelagert ist;
c) Einführen (13) des ersten Behältnisses in die Eingangsöffnung der Umfüllvorrichtung, wobei die Entleerungsöffnung in Richtung des Innern der Umfüllvorrichtung weist;
e) Umspannen (15) der Wandung des ersten Behältnisses und des Endlos-Liners mit dem elastischen Dichtring entlang einer Umfangslinie des erstem Behältnisses; und
f) Endlos-Liner auf der Innenseite der Umfüllvorrichtung öffnen (16), und Inhalt entleeren.

2. Verfahren nach Anspruch 1, weiter umfassend den Schritt
d) Aufblasen (14) einer Blähdichtung bis zum Erreichen eines dichten Abschlusses zwischen der Blähdichtung, einem ringförmigen Abschnitt des Endlos-Liners und der Wandung des ersten Behältnisses, wobei der Schritt d) zwischen Schritt c) und Schritt e) durchgeführt wird.

3. Verfahren (20) nach einem der Ansprüche 1 oder 2, weiter umfassend die Schritte
h) Herausführen (22) des ersten formstabilen Behältnisses (1) aus der Eingangsöffnung;
i) dichtes Verschliessen (23) des Endlos-Liners an zwei beabstandeten Stellen und
j) Zerschneiden (24) des Endlos-Liners zwischen den beiden dicht verschlossen Stellen.

4. Verfahren nach Anspruch 3 in Kombination mit Anspruch 2, wobei vor dem Schritt h) der Schritt
g) Entlasten (21) der Blähdichtung
durchgeführt wird.

5. Verfahren (10, 20) nach einem der Ansprüche 1 bis 4, wobei der Inhalt im Schritt a) durch einen Verschluss über der Entleerungsöffnung dicht eingeschlossen ist und wobei im Schritt f) der Verschluss von der Entleerungsöffnung entfernt wird, um das erste Behältnis zu öffnen.

6. Verfahren (10, 20) nach einem der Ansprüche 1 bis 5, wobei im Schritt a) ein zweites flexibles Behältnis (2) im ersten Behältnis gehalten ist, wobei das zweite Behältnis den Inhalt dicht einschliesst, wobei das zweite Behältnis durch die Entleerungsöffnung im ersten Behältnis zugänglich ist und wobei im Schritt f) zusätzlich auch das zweite Behältnis auf der Innenseite der Umfüllvorrichtung geöffnet wird.

7. Vorrichtung (4) zum kontaminationsgeschützten Entleeren eines Behältnisses, wobei die Vorrichtung eine Eingangsöffnung (5) aufweist, wobei die Vorrichtung derart ausgebildet ist, dass ein schlauchförmiger Endlos-Liner auf einer Aussenseite der Umfüllvorrichtung die Eingangsöffnung umgebend dichtend und abziehbar gelagert sein kann, wobei zumindest ein elastischer Dichtring (9) auf einer Innenseite der Umfüllvorrichtung lagerbar ist,
wobei die Vorrichtung derart ausgebildet ist, dass sie als Umfüllvorrichtung im Verfahren nach einem der Ansprüche 1 bis 4 eingesetzt werden kann.

8. Vorrichtung (4) nach Anspruch 7, wobei ein Eingangsrohr die Eingangsöffnung definiert, wobei das Eingangsrohr so ausgebildet ist, dass ein Vorrat an elastischen Dichtringen auf einer Innenseite der Umfüllvorrichtung radial aussen auf dem Eingangsrohr gelagert sein kann.

9. Vorrichtung nach einem der Ansprüche 7 oder 8, wobei die Eingangsöffnung (5) von einer Blähdichtung (6) umrandet ist.
